# EUROPÄISCHE PATENTSCHRIFT

(11) **EP 0 791 740 B1**
(45) Veröffentlichungstag und Bekanntmachung des Hinweises auf die Patenterteilung: **15.11.2000**
(21) Anmeldenummer: 97101680.3
(22) Anmeldetag: 04.02.1997
(51) Int. Cl.: F02F 11/00

(54) **Aus Blech gefertigter Verschlussdeckel, insbesondere für Kurbelwellen- und Getriebegehäuse bei Kraftfahrzeugen**
Coverplate for an engine or drive casing of motor vehicles
Couvercle d'étanchéité pour le bâtiment d'un moteur ou dispositif d'entraînement pour un véhicule

(30) Priorität: 22.02.1996 DE 19606531
(43) Veröffentlichungstag der Anmeldung: 27.08.1997
(73) Patentinhaber: CR Elastomere GmbH, 51379 Leverkusen (DE)
(72) Erfinder: Engelberth, Wolfgang, 51377 Leverkusen (DE); vom Stein, Hans-Joachim, 51377 Leverkusen (DE)
(74) Vertreter: Gosdin, Michael, Dr.

(56) Entgegenhaltungen:
- EP-A- 0 037 757
- EP-A- 0 264 547
- PATENT ABSTRACTS OF JAPAN vol. 010, no. 353 (M-539), 28.November 1986 & JP 61 152928 A (ISUZU MOTORS LTD), 11.Juli 1986,

## Beschreibung

Die vorliegende Erfindung betrifft einen aus Blech gefertigten Verschlußdeckel für ein Gehäuse mit durch den Verschlußdeckel sich erstreckender Welle, nämlich für Kurbelwellengehäuse bei Kraftfahrzeugen, mit einer dynamisch wirkenden Dichtung für die Welle und einer statisch wirkenden Dichtung für die Deckelflanschfläche, wobei die dynamische Dichtung aus mindestens einer an dem Verschlußdeckel, z. B. durch Anvulkanisieren oder dgl. befestigten, gegebenenfalls federbelasteten, elastischen Dichtlippe und die statische Dichtung aus in Ausnehmungen der Dichtflanschfläche einvulkanisierten, axial hervorstehenden, elastischen Dichtstreifen besteht.

Solche Gehäuseverschlußdeckel sind bereits durch die DE 36 34 735 bekannt.

Bei aus Aluminium oder anderen Leichtmetallen oder Leichtmetallegierungen gegossenen Aufnahmegehäusen wird im allgemeinen eine zum ordnungsgemäßen Zusammenbau der Brennkraftmaschine benützte Markierung für den oberen Totpunkt (OT-Markierung) der Kurbelwelle auf der der Dichtfläche mit dem Kurbelgehäuse gegenüberliegenden Seite des Deckels mit angegossen. Bei aus Blech gefertigten, d.h. z.B. durch Tiefziehen hergestellten Deckeln ist das Anbringen einer solchen Markierung bei der Fertigung des Deckels selbst nicht möglich.

Es ist deshalb Aufgabe der vorliegenden Erfindung, einen Verschlußdeckel zu schaffen, der eine solche OT-Markierung aufweist.

Gelöst wird diese Aufgabe nach der vorliegenden Erfindung dadurch, daß eine Markierung für den oberen Totpunkt der Kurbelwelle nach der Formung des Blechkörpers in einem Arbeitsgang zusammen mit den statischen Dichtstreifen an den Blechkörper angeformt ist, wobei im Blechkörper eine durch diesen hindurchgehende Ausnehmung vorgesehen ist, durch welche beim Anformen der Dichtstreifen das Material des Dichtstreifens hindurchtritt und auf der den Dichtstreifen gegenüberliegenden Seite des Verschlußdeckels die Markierung bildet.

Weil die OT-Markierung auf der den statischen Dichtstreifen gegenüberliegenden Seite des Verschlußdeckels liegen muß, wird nach einem weiteren Merkmal der Erfindung eine Ausnehmung im Verschlußdeckel vorgesehen, die mit den statischen Dichtstreifen in Verbindung steht. Auf diese Weise ist es möglich, diese OT-Markierung gleichzeitig mit der Bildung der statischen Dichtstreifen bzw. der Verbindung der statischen Dichtstreifen mit dem Verschlußdeckel zu erzeugen. Statische Dichtstreifen und OT-Markierung können gleichzeitig angegossen oder anvulkanisiert werden.

Nach einem weiteren Merkmal der Erfindung ist im Bereich der Ausnehmung auf der dem Kurbelwellengehäuse abgewandten Seite ein Vorsprung aus dem gleichen Werkstoff wie die statischen Dichtstreifen gebildet, der auf seiner Stirnfläche die OT-Markierung aufweist.

Ein Ausführungsbeispiel der Erfindung ist in den beiliegenden Zeichnungen dargestellt.

Es zeigen:

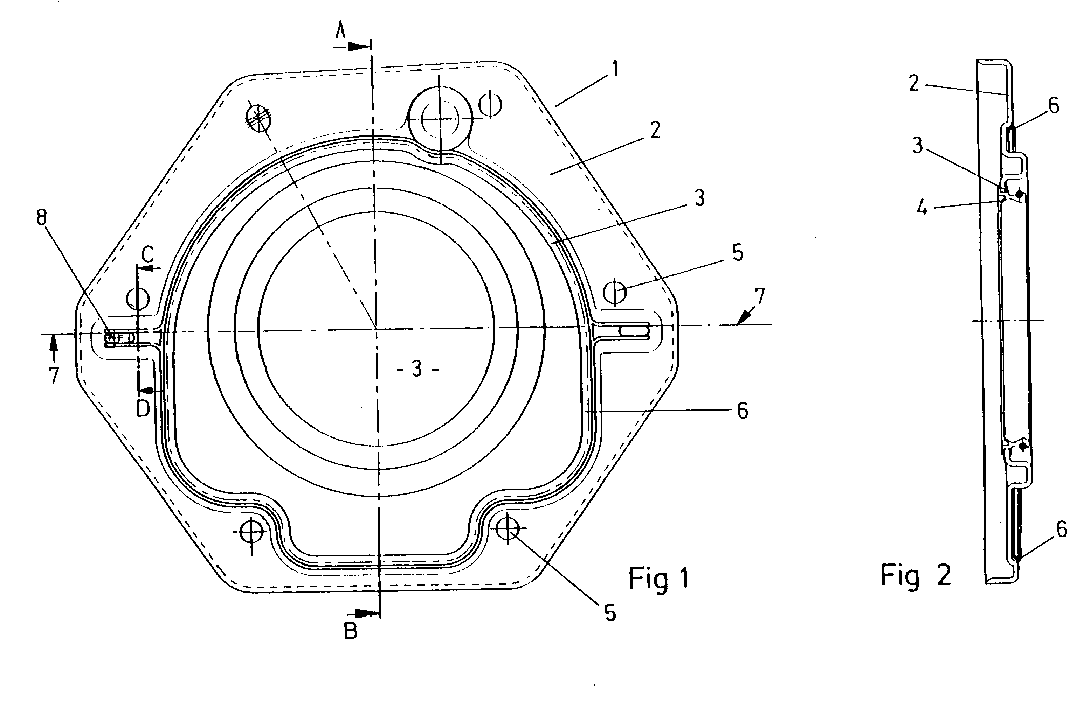

- Figur 1: eine Ansicht des Verschlußdeckels auf die im eingebauten Zustand dem Kurbelwellengehäuse zugewandte Seite,
- Figur 2: einen Schnitt durch den Verschlußdeckel gemäß Linie A-B nach Figur 1,

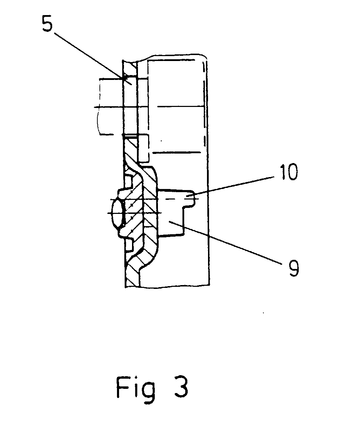

- Figur 3: einen Schnitt durch den Verschlußdeckel gemäß Linie C-D nach Figur 1,

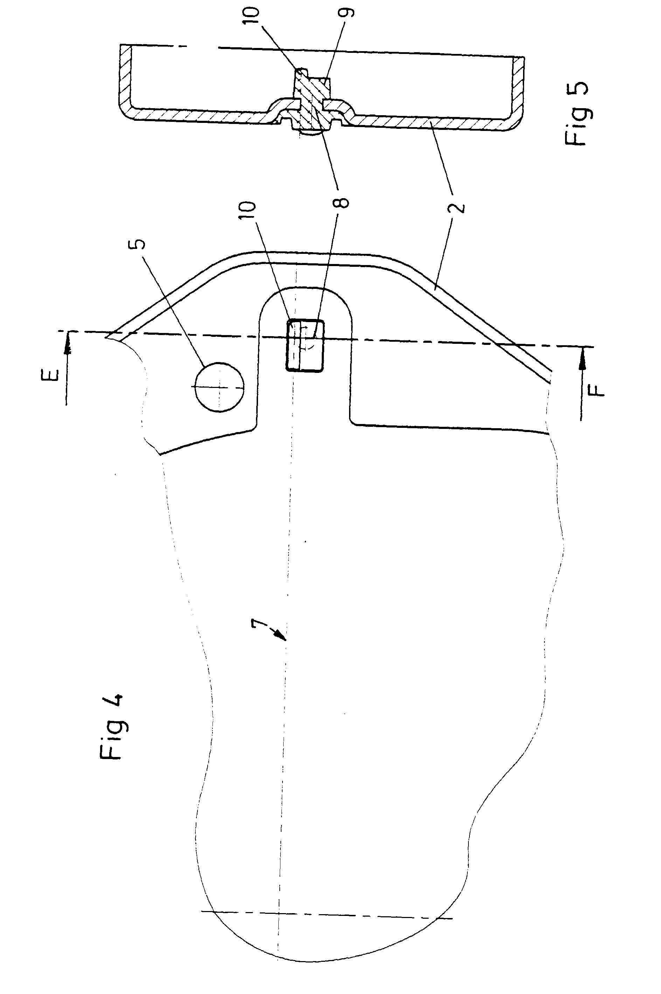

- Figur 4: eine teilweise Ansicht des Verschlußdeckels von der Rückseite, d.h. auf die im eingebauten Zustand dem Kurbelwellengehäuse abgewandte Seite und
- Figur 5: einen Schnitt gemäß Linie E-F nach Figur 4.

Der Verschlußdeckel 1 besteht aus einem topfförmig gezogenen Blechkörper 2 mit einer zentralen Bohrung 3 zur Aufnahme einer Wellendichtung 4, die die den Verschlußdeckel 1 durchgreifende - nicht dargestellte - Kurbelwelle abdichtet, sowie mehreren am Umfang verteilten Bohrungen 5, die zur Aufnahme von Befestigungsschrauben zur Befestigung des Verschlußdeckels 1 am - nicht dargestellten - Kurbelwellengehäuse dienen. Um die Kontaktfläche des Verschlußdeckels 1 mit dem Kurbelwellengehäuse abzudichten, sind auf der dem Kurbelwellengehäuse zugewandten Seite des Verschlußdeckels 1 um die zentrale Bohrung 3 herumlaufende statische Dichtstreifen 6 aus elastomerem Werkstoff vorgesehen. Im Bereich der Mittelebene 7 der zentralen Bohrung 3 und nahe den statischen Dichtstreifen 6 ist im Blechkörper 2 eine Ausnehmung 8 vorgesehen, die mit den Dichtstreifen 6 in Verbindung steht und durch welche beim Anformen der Dichtstreifen 6 elastomerer Werkstoff hindurchtreten und auf der den Dichtstreifen 6 gegenüberliegenden Seite des Verschlußdeckels 1 einen Vorsprung 9 bilden kann, der auf seiner Stirnfläche die OT-Markierung 10 trägt.

## Patentansprüche

1. Aus Blech gefertigter Verschlußdeckel für Kurbelwellengehäuse, mit durch den Verschlußdeckel sich erstreckender Welle, bei Kraftfahrzeugen, mit einer dynamisch wirkenden Dichtung für die Kurbelwelle und einer statisch wirkenden Dichtung für die Deckelflanschfläche, wobei die dynamische Dichtung aus mindestens einer an dem Verschlußdeckel, z. B. durch Anvulkanisieren oder dgl. befestigten, gegebenenfalls federbelasteten, elastischen Dichtlippe und die statische Dichtung aus in Ausnehmungen der Dichtflanschfläche einvulkanisierten, axial hervorstehenden, elastischen Dichtstreifen besteht, wobei eine Markierung (10) für den oberen Totpunkt der Kurbelwelle nach der Formung des Blechkörpers (2) in einem Arbeitsgang zusammen mit den statischen Dichtstreifen (6) an den Blechkörper (2) angeformt ist, wobei im Blechkörper (2) eine durch diesen hindurchgehende Ausnehmung (8) vorgesehen ist, durch welche beim Anformen der Dichtstreifen (6) das Material des Dichtstreifens hindurchtritt und auf der den Dichtstreifen (6) gegenüberliegenden Seite des Verschlußdeckels (1) die Markierung (10) bildet.

2. Verschlußdeckel nach Anspruch 1, dadurch gekennzeichnet, daß die Ausnehmung (8) mit den statischen Dichtstreifen (6) in Verbindung steht.

3. Verschlußdeckel nach einem der Ansprüche 1 oder 2, dadurch gekennzeichnet, daß die Markierung (10) als Stirnfläche auf einem aus dem gleichen Werkstoff wie die statischen Dichtstreifen (6) gebildeten Vorsprung (9) gebildet ist, der sich durch die Ausnehmungen (8) erstreckt.

## Claims

1. A sealing cover made of sheet material for crankshaft housings, with a shaft extending through the sealing cover, in motor vehicles, with a dynamically acting seal for the crankshaft and a statically acting seal for the cover flange face, wherein the dynamic seal comprises at least one, optionally spring-loaded, resilient sealing lip which is fastened to the sealing cover, for example by scorching or the like, and the static seal comprises axially projecting resilient sealing strips which are vulcanised into recesses in the sealing flange face, wherein a marking (10) for the top dead-centre of the crankshaft is formed in one operation together with the static sealing strips (6) on the sheet-material body (2), after the forming of the sheet-material body (2), wherein a recess (8) is provided in the sheet-material body (2) and passes through it, the material of the sealing strip (6) passing through said recess during the forming of the sealing strips to define the marking (10) on the side of the sealing cover (1) opposite the sealing strips (6).

2. A sealing cover according to Claim 1, characterized in that the recess (8) is in communication with the static sealing strips (6).

3. A sealing cover according to Claim 1 or 2, characterised in that the marking (10) is formed as an end face on a projection (9) which is formed from the same material as the static sealing strips (6) and which extends through the recesses (8).

## Revendications

1. Couvercle en tôle pour carters de moteurs de véhicules automobiles, dans lesquels le vilebrequin s'étend à travers le couvercle, comprenant un joint dynamique pour le vilebrquin et un joint statique pour la surface formant rebord de couvercle, dans lequel le joint dynamique est fromé d'au moins une lèvre d'étanchéité élastique, éventuellement soumise à l'action d'un ressort, qui est fixée au couvercle par exemple par vulcanisation ou de manière similaire et le joint statique est formé d'une bande d'étanchéité élastique, saillante dans la direction axiale, vulcanisée dans des évidements de la surface formant rebord, dans lequel un repère (10) pour le point mort supérieur du vilbrequin est façonné sur le corps en tôle (2), après le formage du corps en tôle (2), en une opération en même temps que la bande d'étanchéité (6) statique, un évidement (8) traversant étant prévu dans lecorps en tôle (2), évidement à travers lequel le matériau de la bande d'étanchéité s'écoule lors de la réalisation de la bande d'étanchéité (6) et forme la repère (10) sur la face du couvercle (1) opposée à la bande d'étanchéité (6).

2. Couvercle selon la revendication 1, caractérisé en ce que l'évidement (8) est lié à la bande d'étanchéité (6) statique.

3. Couvercle selon la revendication 1 ou 2, caractérisé en ce que le reprère (10) est réalisé sous forme de surface frotnale sur une saillie (9) réalisée dans le même matériau que la bande d'étanchéité (6) statique, qui s'étend à travers l'évidement (8).
